(19) Europäisches Patentamt
European Patent Office
Office européen des brevets

(11) **EP 2 618 624 A2**

(12) **EUROPÄISCHE PATENTANMELDUNG**

(43) Veröffentlichungstag:
24.07.2013 Patentblatt 2013/30

(51) Int Cl.:
*H04W 76/04* *(2009.01)*

(21) Anmeldenummer: 12189419.0

(22) Anmeldetag: 22.10.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.01.2012 EP 12152135**

(71) Anmelder: **Siemens Aktiengesellschaft**
**80333 München (DE)**

(72) Erfinder:
• **Hund, Johannes**
**80804 München (DE)**
• **Bahr, Michael**
**81827 München (DE)**
• **Schwingenschlögl, Christian**
**85567 Grafing (DE)**

(54) **Verfahren, Datennetz und Netzknoten zur drahtlosen Datenübertragung in einem Datennetz**

(57) Die Erfindung betrifft ein Verfahren zur drahtlosen Datenübertragung in einem Datennetz (DN), wobei in aufeinander folgenden Zyklen (SF) jeweils Daten zwischen einem ersten Netzknoten (G) und einer Mehrzahl von zweiten Netzknoten (A, S) übertragen werden. Dabei sendet der erste Netzknoten (G) zu Beginn eines Zyklus (SF) einen ersten Frame (F1) der physikalischen Schicht aus, der eine Präambel (LP) und einen Initialisierungs-Frame der MAC-Schicht beinhaltet, wobei der Initialisierungs-Frame (BE) die Datenübertragung für den Zyklus (SF) auf der MAC-Schicht initialisiert. Nach Aussenden des ersten Frames (F1) werden Daten in einem oder mehreren Zeitschlitzen aus einer Mehrzahl von Zeitschlitzen übertragen.

## FIG 3

**Beschreibung**

Die Erfindung betrifft ein Verfahren zur drahtlosen Datenübertragung in einem Datennetz sowie ein entsprechendes Datennetz.

Aus dem Stand der Technik sind verschiedene Standards bekannt, mit denen drahtlos Informationen zwischen einem ersten Netzknoten und einer Mehrzahl von zweiten Netzknoten übermittelt werden. Die Datenübertragung erfolgt dabei auf den verschiedenen Schichten des sog. OSI-Referenzmodells, wobei sich die Erfindung auf die Übertagung auf der physikalischen Schicht und der MAC-Schicht bezieht.

Mittels des bekannten Standards IEEE 802.15.4 werden innerhalb von Zyklen bzw. Super-Frames Daten zwischen einem ersten Netzknoten und zweiten Netzknoten übermittelt. Der Standard definiert dabei die Datenübertragung auf der physikalischen Schicht und der MAC-Schicht. Zu Beginn eines Zyklus und in vorbestimmten Zeitschlitzen innerhalb eines Zyklus werden Frames übermittelt, wobei ein Frame in der physikalischen Schicht durch eine Präambel angezeigt wird. Die Präambeln werden zur zeitlichen Synchronisation der Netzknoten genutzt. Innerhalb eines Zyklus werden die gleichen Präambeln verwendet.

Aufgabe der Erfindung ist es, ein Verfahren zur drahtlosen Datenübertragung zu schaffen, bei dem die Länge eines Zyklus der Datenübertragung einfach und flexibel angepasst werden kann.

Diese Aufgabe wird durch die unabhängigen Patentansprüche gelöst. Weiterbildungen der Erfindung sind in den abhängigen Ansprüchen definiert.

Das erfindungsgemäße Verfahren dient zur drahtlosen Datenübertragung in einem Datennetz, wobei in aufeinander folgenden Zyklen jeweils Daten zwischen einem ersten Netzknoten und einer Mehrzahl von zweiten Netzknoten übertragen werden. Innerhalb eines Zyklus werden dabei die nachfolgend erläuterten Schritte durchgeführt.

Zu Beginn des Zyklus sendet der erste Netzknoten einen ersten Frame der physikalischen Schicht aus, der eine Präambel und einen Initialisierungs-Frame der MAC-Schicht beinhaltet, wobei die Präambel durch die zweiten Netzknoten bei Empfang detektiert wird und dabei zur Synchronisation der Datenübertragung innerhalb des Zyklus verwendet wird. Der Initialisierungs-Frame dient zur Initialisierung der Datenübertragung für den Zyklus auf der MAC-Schicht. Das heißt, dieser Initialisierungs-Frame enthält Informationen, die zur Datenübertragung innerhalb des Zyklus auf der MAC-Schicht benötigt werden.

Nach Aussenden des ersten Frames werden Daten (d.h. Nutzlast) in einem oder mehreren Zeitschlitzen aus einer Mehrzahl von Zeitschlitzen übertragen, wobei einem jeweiligen Zeitschlitz der Mehrzahl von Zeitschlitzen ein zweiter Knoten zugeordnet ist und bei einer Datenübertragung in dem jeweiligen Zeitschlitz (ausschließlich) ein zweiter Frame der physikalischen Schicht zwischen dem ersten Netzknoten und dem zweiten Netzknoten, der dem jeweiligen Zeitschlitz zugeordnet ist, übermittelt wird. Je nach Anwendungsfall kann die Übermittlung des zweiten Frames von dem ersten Netzknoten hin zu dem entsprechenden zweiten Netzknoten oder in umgekehrter Richtung erfolgen. Der zweite Frame umfasst eine Präambel und einen Frame der MAC-Schicht mit den zu übertragenden Daten. Die Präambel wird dabei von dem empfangenden ersten oder zweiten Netzknoten detektiert.

Das erfindungsgemäße Verfahren zeichnet sich dadurch aus, dass die Präambeln in Abhängigkeit davon festgelegt sind, ob die Präambel innerhalb eines ersten Frames oder zu einem späteren Zeitpunkt im Zyklus innerhalb eines zweiten Frames ausgesendet wird, wobei eine Präambel im ersten Frame als erste Präambel und die Präambeln in den zweiten Frames als zweite Präambeln derart spezifiziert sind, dass die jeweiligen Längen zumindest eines Teils der zweiten Präambeln und insbesondere aller zweiter Präambeln unterschiedlich zu der Länge der ersten Präambel sind. Unter Länge ist hier und im Folgenden die Informationslänge der entsprechenden ersten bzw. zweiten Präambel zu verstehen.

Das erfindungsgemäße Verfahren ermöglicht eine flexible Festlegung der Länge der Präambeln in Abhängigkeit von deren Position im Zyklus, so dass je nach Anwendungsfall die Zykluszeit durch Variation der Längen der Präambeln geeignet angepasst werden kann. Der Begriff der Präambel ist dabei weit zu verstehen und beschränkt sich nicht nur auf solche Präambeln, wie sie in dem eingangs erwähnten Standard IEEE 802.15.4e definiert sind. Nichtsdestotrotz ist die erste Präambel in einer bevorzugten Ausgestaltung der Erfindung eine Standard-Präambel, wie sie in der physikalischen Schicht UWB PHY des Standards IEEE 802.15.4 definiert ist.

In einer besonders bevorzugten Ausführungsform weisen zumindest ein Teil der zweiten Präambeln und insbesondere alle zweiten Präambeln kürzere Längen als die ersten Präambeln auf. Auf diese Weise kann eine effiziente Datenübertragung mit verkürzten Zykluszeiten erreicht werden.

In einer weiteren bevorzugten Ausführungsform weisen alle zweiten Präambeln die gleichen Längen auf. Vorzugsweise sind dabei alle zweiten Präambeln gleich aufgebaut, wodurch deren Detektion in dem entsprechenden Zeitschlitz vereinfacht wird. Nichtsdestotrotz besteht ggf. auch die Möglichkeit, dass die Längen der zweiten Präambeln zumindest teilweise verschieden sind.

Ein besonders bevorzugter Anwendungsfall der Erfindung ist eine drahtlose Datenübertragung basierend auf dem oben erwähnten Standard IEEE 802.15.4. Dabei wird die im Standard definierte physikalische Übertragungsschicht IEEE 802.15.4 UWB PHY verwendet. Für die MAC-Schicht können gemäß diesem Standard verschiedene Varianten verwendet werden. In einer besonders bevorzugten Ausführungsform wird die LL-Star MAC-Schicht gemäß dem noch im Entwurf befindlichen Standard IEEE 802.15.4e eingesetzt. Der Initialisierungs-Frame ist dabei vorzugsweise der in diesem Standard definierte LL-Beacon.

In einer weiteren, besonders bevorzugten Ausführungsform umfasst die erste Präambel einen Synchronisationsteil aus einer Mehrzahl von gleichen Präambelsymbolen und eine daran anschließende Code-Sequenz, welche das Ende der Präambel anzeigt und vorzugsweise unter Verwendung von einem oder mehreren der Präambelsymbole festgelegt ist. In einer bevorzugten Variante handelt es sich bei dieser Präambel um die in dem Standard IEEE 802.15.4 UWB PHY definierte Präambel. Die Code-Sequenz zur Anzeige des Endes der Präambel ist in diesem Fall der sog. SFD-Code (SFD = Start of Frame Delimiter).

In einer weiteren Ausführungsform des erfindungsgemäßen Verfahrens stellt eine jeweilige zweite Präambel ein einzelnes Präambelsymbol ohne daran anschließende Code-Sequenz dar. Dieses Präambelsymbol kann dabei ggf. das Präambelsymbol sein, wie es im o.g. Standard IEEE 802.15.4 UWB PHY definiert ist.

In einer weiteren Variante des erfindungsgemäßen Verfahrens detektiert ein zweiter Netzknoten eine erste Präambel basierend auf einem ersten Kreuzkorrelations-Filter, mit dem Kreuzkorrelationswerte zwischen dem Code der ersten Präambel und einem empfangenen Signal oder einem aus dem empfangenen Signal abgeleiteten Signal zu verschiedenen Zeitpunkten ermittelt werden. Die Verwendung solcher Kreuzkorrelations-Filter ist an sich aus dem Stand der Technik bekannt und wird deshalb nicht im Detail beschrieben. Dabei wird über den maximalen Kreuzkorrelationswert, der durch den ersten Kreuzkorrelations-Filter ausgegeben wird, die erste Präambel detektiert. Um eine fehlerhafte Detektion von ersten Präambeln zu vermeiden, wird in einer bevorzugten Ausführungsform zur Bestimmung des maximalen Kreuzkorrelationswerts, der durch den ersten Kreuzkorrelations-Filter ausgegeben wird, ein Schwellwert festgelegt, den der maximale Kreuzkorrelationswert überschreiten muss.

In einer besonders bevorzugten Ausführungsform ist der Code zumindest einer zweiten Präambel als Teilmenge im Code der ersten Präambel enthalten. Insbesondere kann die erste Präambel dabei die oben erwähnte Standard-Präambel gemäß der physikalischen Schicht des Standards IEEE 802.15.4 sein und die zweite Präambel ist vorzugsweise eine Präambel, welche aus einem einzelnen Präambelsymbol gemäß diesem Standard besteht. Im Falle einer derart aufgebauten ersten Präambel verwendet ein zweiter Netzknoten bei der Detektion der ersten Präambel einen zweiten Kreuzkorrelations-Filter, mit dem Kreuzkorrelationswerte zwischen dem Code der zumindest einer zweiten Präambel innerhalb der ersten Präambel und einem empfangenen Signal zu verschiedenen Zeitpunkten ermittelt werden, wobei die Kreuzkorrelationswerte, welche durch den zweiten Kreuzkorrelations-Filter ausgegeben werden, aus dem empfangenen Signal abgeleitete Signale darstellen, basierend auf denen der erste Kreuzkorrelations-Filter die erste Präambel detektiert.

In einer weiteren Variante detektiert der erste Netzknoten oder ein zweiter Netzknoten die zweite Präambel basierend auf einem bzw. dem oben definierten zweiten Kreuzkorrelations-Filter, mit dem Kreuzkorrelationswerte zwischen dem Code der zweiten Präambel und einem empfangenen Signal oder einem aus dem empfangenen Signal abgeleiteten Signal zu verschiedenen Zeitpunkten ermittelt werden, wobei über dem maximalen Kreuzkorrelationswert, der durch den zweiten Kreuzkorrelations-Filter ausgegeben wird, die zweite Präambel detektiert wird.

Um wiederum eine fehlerhafte Detektion entsprechender zweiter Präambeln zu vermeiden, wird in einer bevorzugten Variante zur Bestimmung des maximalen Kreuzkorrelationswerts, der durch den zweiten Kreuzkorrelations-Filter im Rahmen der Detektion der zweiten Präambeln ausgegeben wird, ein Schwellwert festgelegt, den der maximale Kreuzkorrelationswert überschreiten muss.

In einer besonders bevorzugten Ausführungsform, bei der die erste Präambel die zweite Präambel ein oder mehrere Male umfasst, wird der obige Schwellwert basierend auf dem maximalen Kreuzkorrelationswert festgelegt, der im Rahmen der Detektion der ersten Präambel in einem zweiten Netzknoten durch den ersten oder zweiten Kreuzkorrelations-Filter ausgegeben wird. Der Schwellwert ist dabei vorzugsweise ein vorbestimmter prozentualer Anteil (z.B. 80 %) des maximalen Kreuzkorrelationswerts, der im Rahmen der Detektion der ersten Präambel durch den ersten oder zweiten Kreuzkorrelations-Filter ausgegeben wird.

Das erfindungsgemäße Verfahren eignet sich insbesondere zur Verwendung in einem Datennetz einer industriellen Automatisierungsanlage und ermöglicht eine robuste und effiziente Datenübertragung mit entsprechend angepassten Zykluszeiten. Die zweiten Netzknoten sind dabei vorzugsweise Sensoren und/oder Aktoren, wobei Sensoren nur Daten in Richtung hin zum ersten Netzknoten übertragen können, wohingegen Aktoren bidirektional Daten sowohl zum ersten Netzknoten senden als auch von dem ersten Netzknoten empfangen können.

Neben dem oben beschriebenen Verfahren betrifft die Erfindung ferner ein Datennetz für drahtlosen Datenübertragung, umfassend einen ersten Netzknoten und eine Mehrzahl von zweiten Netzknoten, wobei der erste Netzknoten und die Mehrzahl von zweiten Netzknoten derart ausgestaltet sind, dass im Betrieb des Datennetzes in aufeinander folgenden Zyklen jeweils Daten zwischen dem ersten Netzknoten und der Mehrzahl von zweiten Netzknoten mit dem oben beschriebenen erfindungsgemäßen Verfahren bzw. einer oder mehrerer Varianten des erfindungsgemäßen Verfahrens übertragen werden.

Die Erfindung betrifft darüber hinaus einen Netzknoten zur Verwendung in dem oben beschriebenen Verfahren bzw. dem oben beschriebenen Datennetz. Der Netzknoten fungiert dabei als erster Netzknoten, der erste Präambeln aussenden kann und zweite Präambeln aussenden und/oder detektieren kann.

Die Erfindung umfasst ferner einen weiteren Netzknoten zur Verwendung in dem oben beschriebenen Verfahren bzw. dem oben beschriebenen Datennetz, wobei der Netzknoten einen zweiten Netzknoten darstellt, der erste Präambeln detektieren kann und zweite Präambeln aussenden und/oder detektieren kann. Der zweite Netzknoten kann dabei ein Netzknoten sein, der sowohl Daten hin zum ersten Knoten aussenden kann als auch von diesem empfangen kann. In diesem Fall kann der Netzknoten die entsprechenden zweiten Präambeln aussenden und detektieren. Ein solcher Netzknoten ist insbesondere der oben erwähnte Aktor. Ebenso kann ein zweiter Netzknoten derart ausgestaltet sein, dass er nur Daten hin zum ersten Netzknoten übertragen kann. In diesem Fall kann der zweite Netzknoten entsprechende erste Präambeln nur detektieren und nicht aussenden. Ein solcher Netzknoten ist insbesondere der oben beschriebene Sensor.

Ausführungsbeispiele der Erfindung werden nachfolgend anhand der beigefügten Figuren detailliert beschrieben.

Es zeigen:

Fig. 1    eine schematische Darstellung einer Netztopologie, in der eine Ausführungsform des erfindungsgemäßen Verfahrens durchgeführt wird;

Fig. 2    den Aufbau einer Präambel in der physikalischen Schicht gemäß dem Standard IEEE 802.15.4;

Fig. 3    einen Zyklus einer Datenübertragung, in dem Präambeln verschiedener Länge gemäß einer Ausführungsform des erfindungsgemäßen Verfahrens verwendet werden;

Fig. 4    ein Diagramm, welches eine Abweichung beim Empfang von zweiten Präambeln zeigt, welche durch einen Drift bei der Synchronisierung basierend auf der ersten Präambel hervorgerufen wird; und

Fig. 5    ein Diagramm analog zur Fig. 4, wobei nunmehr zur Detektion der zweiten Präambeln ein Schwellwert verwendet wird.

Nachfolgend wird das erfindungsgemäße Verfahren in Bezug auf eine drahtlose Datenübertragung gemäß dem Standard IEEE 802.15.4 beschrieben. Dieser Standard kommt insbesondere in der industriellen Automatisierung zum Einsatz und ermöglicht eine energieeffiziente Übertragung zwischen Sensoren bzw. Aktoren und einem Gateway/ Koordinator. Das Gateway entspricht dabei einer Ausführungsform eines ersten Knotens im Sinne von Anspruch 1. Dem gegenüber sind entsprechende Sensoren und Aktoren Ausführungsbeispiele von zweiten Knoten im Sinne von Anspruch 1.

Gemäß dem Standard IEEE 802.15.4 wird die Datenübertragung auf der physikalischen Schicht (als UWB PHY bezeichnet) und auf der MAC-Schicht bzw. L2-Schicht festgelegt. Auf der physikalischen Schicht wird UWB-Impulse-Radio (UWB = Ultrawide Band) genutzt, welches einen nicht-kohärenten Empfang basierend auf der Detektion der Energie des Signals mit einer geringen Tastrate ermöglicht. Durch diese geringe Tastrate wird eine energieeffiziente Datenübertragung gewährleistet.

Im Rahmen der herkömmlichen UWB-Übertragung werden lange Präambeln verwendet, die in entsprechenden Zyklen (auch als Super-Frames bezeichnet) zur Synchronisation der Datenübertragung zwischen den einzelnen Sensoren bzw. Aktoren und dem Gateway eingesetzt werden. Mit der hier beschriebenen Ausführungsform des erfindungsgemäßen Verfahrens wird durch entsprechende Anpassung der Präambeln eine Verkürzung der Zykluszeiten erreicht, wie im Folgenden näher beschrieben wird.

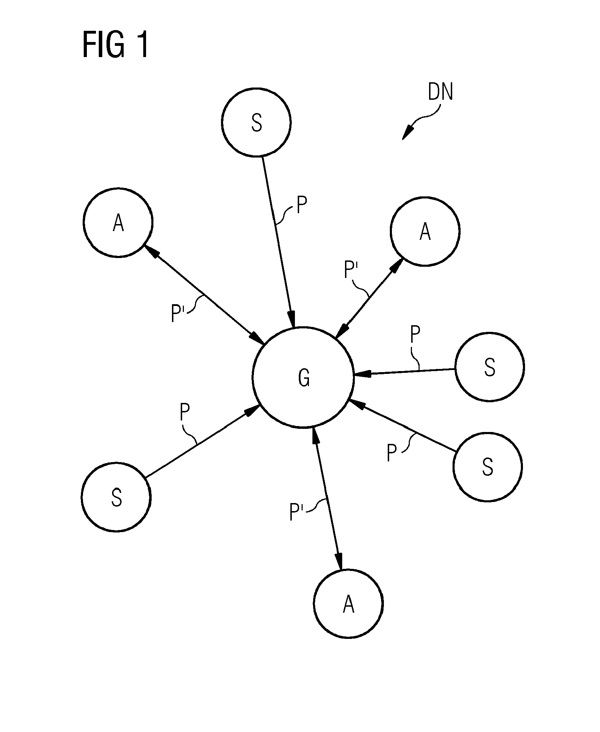

Fig. 1 zeigt beispielhaft ein Datennetz DN, in dem das erfindungsgemäße Verfahren eingesetzt werden kann. Mit A sind dabei Aktoren und mit S Sensoren bezeichnet, die mit einem Gateway G kommunizieren. Die Sensoren können dabei nur unidirektional Daten an das Gateway übertragen, wie durch die Pfeile P angedeutet ist. Demgegenüber können Aktoren bidirektional sowohl Daten an das Gateway übermitteln als auch Daten von dem Gateway empfangen, wie durch die Doppelpfeile P' wiedergegeben wird. Die Netztopologie der Fig. 1 ist sternförmig aufgebaut, d.h. es erfolgt nur eine Kommunikation zwischen dem Gateway G und Sensoren bzw. Aktoren und nicht zwischen Sensoren und Aktoren.

Bevor auf das erfindungsgemäße Verfahren eingegangen wird, wird zum besseren Verständnis zunächst der Aufbau einer Standard-Präambel in der physikalischen Schicht des Standards IEEE 802.15.4 sowie der Aufbau der in der MAC-Schicht verwendeten Frames erläutert.

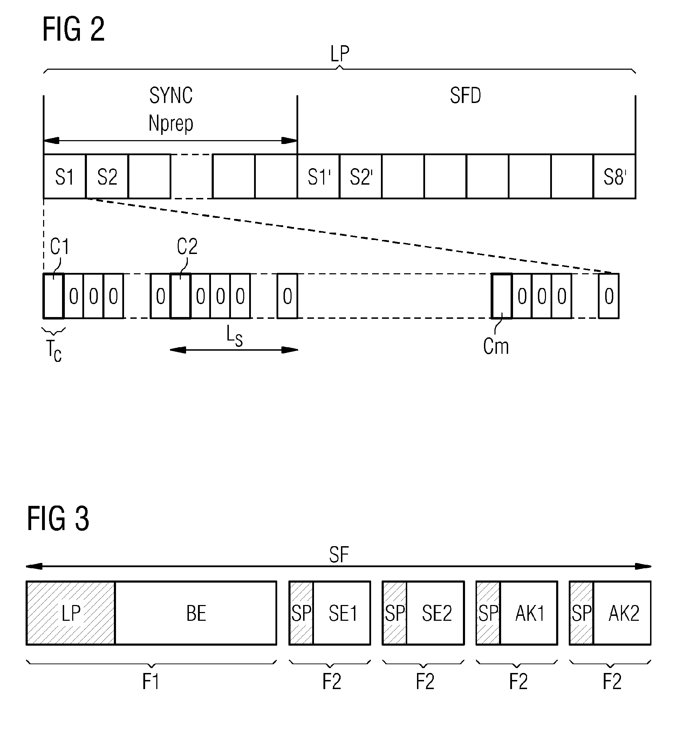

Fig. 2 zeigt die Struktur einer an sich bekannten Präambel LP, welche herkömmlicherweise in regelmäßigen Abständen innerhalb eines Super-Frames durch das Gateway G der Fig. 1 ausgesendet wird und durch die Sensoren S bzw. Aktoren A detektiert werden kann. Die Präambel LP umfasst einen Synchronisationsteil SYNC sowie eine Codesequenz, welche auch als SFD (SFD = Start of Frame Delimiter) bezeichnet wird. Über den SFD-Code kann dabei das Ende der Präambel detektiert werden. Sowohl der Synchronisationsteil SYNC als auch der SFD-Code verwenden eine Anzahl von sog. Präambelsymbolen S1, S2, ... bzw. S1', S2', ... S8'. Die einzelnen Präambelsymbole S1, S2, usw. des Synchronisationsteils entsprechen einander. Jedes Präambelsymbol umfasst wiederum eine Sequenz aus 31 ternären Symbolen C1, C2, ..., Cm (m=31), wobei diese Sequenz auch als Präambelcode $\overrightarrow{C_p}$ bezeichnet wird.

Die Sequenz $\overrightarrow{C_p}$ wird in eine Impulsfolge Psym transformiert, welche einem jeweiligen Präambelsymbol S1, S2, usw. entspricht. Die entsprechenden Codesymbole C1 bis Cm werden dabei als Puls moduliert, wobei das Codesymbol "1" als ein Puls in Phase, das Codesymbol "-1" als ein Puls mit entgegengesetzter Phase und das Codesymbol "0" als eine Pause moduliert wird. Die Impulsfolge wird zeitlich durch die Einfügung von Pausen zwischen den Codesymbolen gestreckt, wie in Fig. 2 durch entsprechende Nullen zwischen den Codesymbolen C1, C2 usw. angedeutet ist. Die Information eines Codesymbols erstreckt sich gemäß Fig. 2 über die Länge $L_s$. Insgesamt wird auf diese Weise unter der Verwendung des Kronecker-Produkts $\square$ folgendes Präambelsymbol erhalten:

$$\overrightarrow{Psym} = \overrightarrow{C_P} \,\square\, \vec{L} = \bigcup_{n=1}^{31} \overrightarrow{C_P}(n) \cup \{0,...,0\}_L$$

Die obige Gleichung zeigt, dass eine Pause von fester Länge L (auch als L-Spreading bezeichnet) zwischen jedem Codesymbol eingefügt wird. Das Symbol $\cup$ in obiger Gleichung bezeichnet dabei die Operation der Vektorverknüpfung $\{A\} \cup \{B\} = \{A, B\}$.

Der Synchronisationsteil SYNC der Präambel umfasst gemäß Fig. 2 Nprep Wiederholungen des gleichen Präambelsymbols. Nprep kann dabei die Werte 16, 64, 1024 oder 4096 aufweisen. Der SFD-Code ist eine Sequenz aus folgenden acht Symbolen:

$$\overrightarrow{C_{SFD}} = \{0, +1, 0, -1, +1, 0, 0, +1\}$$

Diese Sequenz wird mit dem Präambelsymbol multipliziert, so dass sich die einzelnen Codes SFD$_i$, die den Symbolen S1', S2' usw. der Fig. 1 entsprechen, sowie die gesamte Präambel Prea wie folgt ergeben:

$$SFD_i = \overrightarrow{C_{SFD}}(i) \cdot \overrightarrow{Psym}$$

$$\overrightarrow{Prea} = (\bigcup_{n=1}^{Nprep} \overrightarrow{Psym}) \cup \overrightarrow{SFD}$$

Die Präambel ist somit zwischen 24 und 4104 Präambelsymbolen lang. Die Pulslänge $T_C$ für die einzelnen Codes C1, C2 usw. liegt im Standard IEEE 802.15.4 bei 2 ns. Für das L-Spreading werden 15 Pulse verwendet. Demzufolge ist ein einzelnes der 31 Codesymbole der Präambel 16 Pulse bzw. 32 ns lang. Insgesamt ergibt sich für ein Präambelsymbol S1, S2, usw. eine Länge von 992 ns. Die kürzest mögliche Präambellänge bei 16 Wiederholungen der Präambelsymbole gefolgt von dem SFD-Code liegt bei 24 Präambelsymbolen oder 23,8 μs.

Im Rahmen der erfindungsgemäßen Datenübertragung wird die MAC-Schicht gemäß dem noch im Entwurf befindlichen Standard IEEE 802.15.4e verwendet. Dieser Standard beschreibt Erweiterungen der MAC-Schicht für deterministische Netzwerke mit geringer Latenz, die auch als LLDN-Netzwerke bezeichnet werden (LLDN = Low Latency Deterministic Network). Die Erweiterungen definieren neue Arten von MAC-Frames in der Form sog. LL-Frames (LL = Low Latency). Zur Anzeige solcher LL-Frames wird der neue IEEE 802.15.4 Frame-Typ-Wert "100" (binär) verwendet. Es gibt insgesamt vier LL-Frametypen, nämlich LL-Beacon, LL-Data, LL-Acknowledgement und LL-MAC-Command. LL-Frames weisen einen sehr kurzen MAC-Header auf, der nur ein Byte lang ist, ggf. zuzüglich Sicherheitsfelder. Auf diese Weise wird die Latenz der Datenübertragung mit sehr kleinen Nutzlasten von einem oder zwei Bytes enorm reduziert. Die Information, welche herkömmlicherweise in IEEE 802.15.4 Frames, jedoch nicht in den LL-Frames enthalten ist, wird während der Konfiguration des Netzwerks übertragen. Das anhand von Fig. 1 beschriebene Netzwerk ist in der hier beschriebenen Ausführungsform ein LLDN-Netzwerk.

Im Rahmen der Datenübertragung auf der MAC-Schicht gemäß IEEE 802.15.4e wird in einem Zyklus bzw. Super-Frame zunächst ein LL-Beacon übermittelt, der Basisinformation über die Struktur des Super-Frames enthält, wie z.B. eine Identifikation der aktuellen Netzwerkkonfiguration, das Vorhandensein und die Größe sog. Management-Zeitschlitze, die Größe sog. Basis-Zeitschlitze (englisch "base timeslots") und die Anzahl der Basis-Zeitschlitze in einem Super-Frame. Herkömmlicherweise wird jeder Zyklus durch die Übertragung eines LL-Beacons begonnen, wobei hierfür ein Frame der physikalischen Schicht verwendet wird, der mit der anhand von Fig. 2 erläuterten Präambel beginnt. Die Präambel und der entsprechende Beacon werden dann von den einzelnen Sensoren bzw. Aktoren detektiert und zur Synchronisation verwendet. Dabei wird den Sensoren bzw. Aktoren jeweils ein einzelner Zeitschlitz zugewiesen, in dem sie Daten an das Gateway G senden können bzw. von diesem empfangen können. Innerhalb des Super-Frames wartet somit ein entsprechender Sensor bzw. Aktor auf den ihm zugewiesenen Zeitschlitz, um dann in diesem Zeitschlitz im Fall eines Sensors Daten auszusenden bzw. im Falle eines Aktors zu empfangen und/oder auszusenden. Herkömmlicherweise wird zur Datenübertragung in den jeweiligen Zeitschlitzen ein Frame in der physikalischen Schicht verwendet, welcher die gleiche Präambel aufweist wie der Frame, der zur Übermittlung des Beacons verwendet wurde. Innerhalb dieses Frames ist nunmehr jedoch kein Beacon mehr enthalten, sondern ein Frame der MAC-Schicht, mit dem entsprechende Daten (d.h. Nutzlast) übermittelt werden.

Im Unterschied zu der herkömmlichen zyklischen Datenübertragung wird im Rahmen der hier beschriebenen Ausführungsform nunmehr bei der Übermittlung von Daten, die nach dem Aussenden des Beacons erfolgt, eine kürzere Präambel im Vergleich zu der Präambel LP der Fig. 2 verwendet. Dies wird anhand von Fig. 3 verdeutlicht. Diese Figur zeigt einen Zyklus in der Form eines Super-Frames SF. In dem ersten Frame F1 der physikalischen Schicht wird der entsprechende LL-Beacon BE der MAC-Schicht mittels der herkömmlichen Präambel LP der Fig. 2 übertragen. Die nachfolgend in den entsprechenden Zeitschlitzen verwendeten Frames F2 der physikalischen Schicht weisen demgegenüber eine stark verkürzte Präambel SP auf. Die Frames F2 enthalten entsprechende Daten-Frames der MAC-Schicht, welche die zu übermittelnde Nutzlast enthalten. Mit SE1 und SE2 werden dabei von entsprechenden Sensoren an das Gateway G übertragene Daten und mit AK1 und AK2 von dem Gateway G zu entsprechenden Aktoren übertragene Daten angedeutet. Der die Daten empfangende Netzknoten kann die zweite Präambel detektieren und anschließend die Daten auslesen. In einer besonders bevorzugten Ausführungsform wurde dabei für die kurze Präambel SP ein einzelnes der Präambelsymbole S1, S2 usw. der Fig. 2 verwendet. Ferner wurde der SFD-Code weggelassen. Auf diese Weise kann die Zykluszeit stark verkürzt werden.

Der Idee der soeben beschriebenen Verkürzung der Präambeln liegt die Überlegung zugrunde, dass eine ausreichende Synchronisation zwischen sendenden und empfangenden Netzknoten auch bei verkürzten Präambeln gewährleistet ist, wie im Folgenden erläutert wird.

Im Rahmen der Synchronisation unter Verwendung der Präambel LP im ersten Frame F1 des in Fig. 3 gezeigten Super-Frames SF bestimmt der empfangende Netzknoten das Ende des SFD-Codes. Jeder Netzknoten könnte diesen Zeitpunkt verwenden, um sich mit dem Gateway durch die Bestimmung des Beginns des Beacon-Frames BE zu synchronisieren, falls die Länge der Präambel LP und das entsprechende Guard-Intervall der MAC-Schicht sowie die Übertragungszeit des Signals bekannt sind. Das Guard-Intervall bezeichnet dabei eine vorgeschriebene Zeitspanne, die ein sendender Netzknoten zu Beginn eines Zeitschlitzes wartet, bevor er die Übertragung beginnt. Die Übertragungszeit des Signals ist abhängig von dem Abstand zwischen dem Gateway und dem entsprechende Netzknoten. Diese ist in der Regel nicht bekannt. Deshalb muss ein Netzknoten die Länge des Datenteils des Frames F1 verwenden, welche in dem Header des Frames enthalten ist, um das Ende des Beacon-Frames BE zu bestimmen und sich mit dem Gateway G zu synchronisieren.

Die Synchronisation wird mit zunehmender Zeit innerhalb eines Super-Frames SF immer schlechter. Dies liegt an der Qualität der Oszillatoren sowohl in den (zweiten) Netzknoten A bzw. S als auch im Gateway G. Jede Oszillatorfrequenz weicht von einer entsprechenden Nominalfrequenz ab, so dass jeder Oszillator über die Zeit driftet. Dieser Uhrendrift wird in ppm (ppm = parts per million) gemessen. In der physikalischen Schicht des Standards IEEE 802.15.4 ist ein maximaler Drift von 20 ppm erlaubt.

Aus diesem maximalen Drift ergibt sich eine Abschätzung für die maximale Desynchronisation des Uhrendrifts wie folgt:

$$T_{drift}(t) = (20\text{ppm} \cdot 2) \cdot t = 40 \cdot 10^{-6} \cdot t$$

Diese Zeit ist abhängig von der Zeit seit der letzten Synchronisation zwischen Sender und Empfänger.

Ausgehend von der vorgegebenen Gesamtanzahl von Basis-Zeitschlitzen (BTS) der Super-Frames SF ergibt sich für die aufeinander folgenden Basis-Zeitschlitze $i=1...N_{BTS}$ für Datenpakete der Länge $T_\delta$ folgender Drift:

$$T_{drift}(T_\delta \cdot i)$$

Dieser Drift stellt eine obere Grenze für das Auseinanderlaufen der Uhren dar. Es wird hierdurch der maximale Offset zwischen dem Zeitschlitz des Gateways und dem Zeitschlitz eines zweiten Netzknotens repräsentiert, der dem Zeitschlitz zugeordnet ist. Der Offset verursacht eine Abweichung zwischen dem tatsächlichen und dem erwarteten Startpunkt der Datenübertragung im entsprechenden Zeitschlitz.

Um dieser Abweichung entgegenzuwirken, wird im MAC-Protokoll des Standards IEEE 802.15.4 das oben erwähnte Guard-Intervall mit der Länge von 11 Präambelsymbolen verwendet. Eine Datenübertragung beginnt dabei erst nach Ablauf dieses Guard-Intervalls. Demzufolge kann eine durch den obigen Drift verursachte Verschiebung der Transmission, die kleiner als 11 Präambelsymbole ist, keine andere Datenübertragung stören. Somit kann eine erlaubte Synchronisation basierend auf dem

Frame F1 dann erreicht werden, wenn die Anzahl der Basis-Zeitschlitze $N_{BTS}$ die folgende Bedingung erfüllt:

$$T_{drift}(T_\delta \cdot N_{BTS}) < 11 \cdot T_{Psym}$$

Für Anwendungen im industriellen Umfeld, für welche die Erfindung hauptsächlich vorgesehen ist, liegt die Länge eines Super-Frames im Bereich von einigen Millisekunden. Bei der Länge eines Super-Frames von 2 ms ergibt sich der erwartete Drift gemäß obiger Gleichung wie folgt:

$$T_{drift}(2 \cdot 10^{-3}\,\text{s}) = 80 \cdot 10^{-9}\,\text{s}$$

Dieser Drift ist wesentlich kürzer als 11 Präambelsymbole, denn ein einzelnes Präambelsymbol hat im Standard IEEE 802.15.4 eine ungefähre Dauer von 1 µs. Hieraus ergibt sich die Erkenntnis, dass eine einmalige Synchronisation basierend auf dem Frame F1 mit der Präambel LP und dem Beacon BE für die Dauer eines Super-Frames SF ausreicht.

Jedoch beeinflusst nicht nur der Drift der Uhren die Synchronisation, sondern auch der Abstand zwischen den Netzknoten. Für eine unbekannte Verteilung der zweiten Netzknoten in Bezug auf das Gateway, wie es üblicherweise der Fall ist, kann die Flugzeit $t_{TOF}$ wie folgt ausgedrückt werden:

$$t_{TOF} = \frac{\phi_d}{c}$$

Dabei bezeichnet c die Lichtgeschwindigkeit und $\phi_d$ ist eine Zufallsvariable, welche durch die Reichweite $d_{max}$ des Gateways begrenzt ist. Deshalb ergibt sich die maximale Flugzeit $t_{TOF}$ für ein beispielhaftes Netzwerk mit einer Reichweite von 10 m, welche eine übliche Reichweite in Fabriken ist, wie folgt:

$$t_{TOF} = \pm \frac{d_{max}}{c} = \pm \frac{10\,\text{m}}{3 \cdot 10^8\,\text{m/s}} = \pm 33.3 \cdot 10^{-9}\,\text{s}$$

Dieser Offset ist vernachlässigbar in Vergleich zu dem obigen Guard-Intervall und stört somit die Synchronisation nicht.

Insgesamt ergibt sich eine Granularität $\Delta t$ der Synchronisation basierend auf dem ersten Frame F1 für den i-ten Basiszeitschlitz wie folgt:

$$\Delta t = 0 \pm t_{TOF} \pm T_{drift}(T_{\delta} \cdot i)$$

Basierend auf einer Reichweite von 10 m und bei Super-Frames von 2 ms ergibt sich hieraus eine maximale Abweichung von 113 ns. Dieser Wert ist kleiner als die 11 Präambelsymbole des Guard-Intervalls.

Gemäß den obigen Darlegungen ist es somit nicht erforderlich, innerhalb eines Super-Frames nochmals eine Synchronisierung über lange Präambeln LP durchzuführen. Nichtsdestotrotz muss dem Empfänger angezeigt werden, wenn im entsprechenden Zeitschlitz ein Frame F2 mit Daten ankommt. Dies kann jedoch mit deutlich kürzeren Präambeln SP erreicht werden. In der hier beschriebenen Ausführungsform wird als Präambel lediglich ein einzelnes Präambelsymbol der Symbole S1, S2, usw. verwendet. Ferner wird der SFD-Code weggelassen. Durch die Verwendung einer solchen kompakten Präambel wird die Dauer eines Basis-Zeitschlitzes verkürzt und hierdurch die gesamte Größe des Super-Frames SF vermindert. Es können somit die Zyklen bei gleicher Menge an übertragenen Daten verkürzt werden.

Zur Umsetzung der Erfindung wird in der physikalischen Schicht die Information aus der MAC-Schicht verwendet, ob ein erster Frame mit einem Beacon oder darauffolgende zweite Frames mit Daten übermittelt werden. In Abhängigkeit davon detektiert dann der Empfänger die lange Präambel LP oder die kurze Präambel SP. Im Folgenden wird erläutert, wie solche Präambeln von einem Empfänger detektiert werden können. Der Empfänger kann dabei das Gateway G bzw. ein Aktor A sein, wobei das Gateway nur zur Detektion von kurzen Präambeln eingerichtet sein muss. Zur Erfassung einer Präambel wird ein Präambeldetektor verwendet, der auf einem Kreuzkorrelations-Filter beruht. Die Ausgabe dieses Filters ist ein Maß für die Ähnlichkeit des empfangenen Signals $BB_{ADC}$ mit dem erwarteten Präambelcode $\vec{C_p}$.

Die Detektion eines einzelnen Präambelsymbols und somit der Präambel SP wird demzufolge über einen Kreuzkorrelations-Filter bestimmt, der folgende Korrelationswerte ausgibt:

$$Cval_n = \sum_{i=1}^{31} \overrightarrow{C_P}(i) \cdot \overrightarrow{BB_{ADC}}(i+n)$$

Ein Maximum dieser Korrelationswerte $Cval_n$ zeigt ein detektiertes Präambelsymbol und damit die kurze Präambel SP an. Um eine lange Präambel LP zu detektieren, wird die Ausgabe des obigen Kreuzkorrelations-Filters wiederum unter Verwendung eines Kreuzkorrelations-Filters mit dem SFD-Code verglichen, wodurch sich folgende Korrelationswerte ergeben:

$$SCval_n = \sum_{i=1}^{8} \overrightarrow{C_{SFD}}(i) \cdot \overrightarrow{Cval}(i+n)$$

Wenn der Korrelationswert $SCval_n$ maximal wird, wird hierdurch der SFD-Code und damit die lange Präambel LP detektiert.

Der Präambeldetektor in einem entsprechenden Empfänger ist somit zur Umsetzung des erfindungsgemäßen Verfahrens derart ausgestaltet, dass er den Kreuzkorrelations-Filter SCval bei der Detektion einer langen Präambel LP und den Kreuzkorrelations-Filter Cval bei der Detektion einer kurzen Präambel SP verwendet, d.h. es gilt:

$$\overrightarrow{CV} = \begin{cases} \overrightarrow{SCval} & \textit{falls Frame F1 vorliegt} \\ \overrightarrow{Cval} & \textit{falls Frame F2 vorliegt} \end{cases}$$

In der hier beschriebenen Ausführungsform wird ein Maximum der Korrelationswerte durch einen Wechsel des Vorzeichens von positiv nach negativ in der ersten Ableitung des Stroms der Korrelationswerte $\overrightarrow{CV'}$ bestimmt.

Jedoch können thermisches Rauschen, Interferenz oder andere Einflüsse das empfangene Signal verrauschen. Dies kann zur Folge haben, dass irrtümlicherweise ein Korrelationswert einem Maximum zugeordnet wird, obwohl keine Präambel detektiert wurde. In einer bevorzugten Ausführungsform wird deshalb die Detektion eines maximalen Korrelationswerts an eine Schwelle h gekoppelt, wobei das Maximum eines Korrelationswerts nur dann akzeptiert wird, wenn die Schwelle h überschritten wird. Die Schwelle h wird derart gewählt, dass das Rauschen keinen maximalen Korrelationswert verursacht, aber dennoch tatsächlich vorhandene Präambeln detektiert werden. Die Implementierung einer entsprechenden Schwelle h zur Detektion von maximalen Korrelationswerten kann dabei mathematisch wie folgt ausgedrückt werden:

$$\overrightarrow{CV}_{\max} = CV_n \in \overrightarrow{CV} \left| CV_{n+1} < CV_n \vee CV_n \geq h \right.$$

Geht man von einem konstanten Rauschpegel für die Dauer eines Super-Frames aus, was für die Dauer von einigen Millisekunden eine gerechtfertigte Annahme ist, kann diese Schwelle in einem Super-Frame konstant festgelegt werden. Ein Empfänger kann dabei den maximalen Korrelationswert $SCval_{max}$ des zur Detektion der langen Präambel LP eingesetzten Filters SCval verwenden, um hierdurch die Schwelle h zur Detektion der kurzen Präambel geeignet festzulegen. Beispielsweise kann die Schwelle h auf einen prozentualen Wert des maximalen Korrelationswerts des Filters zur Detektion der Präambel LP gesetzt werden.

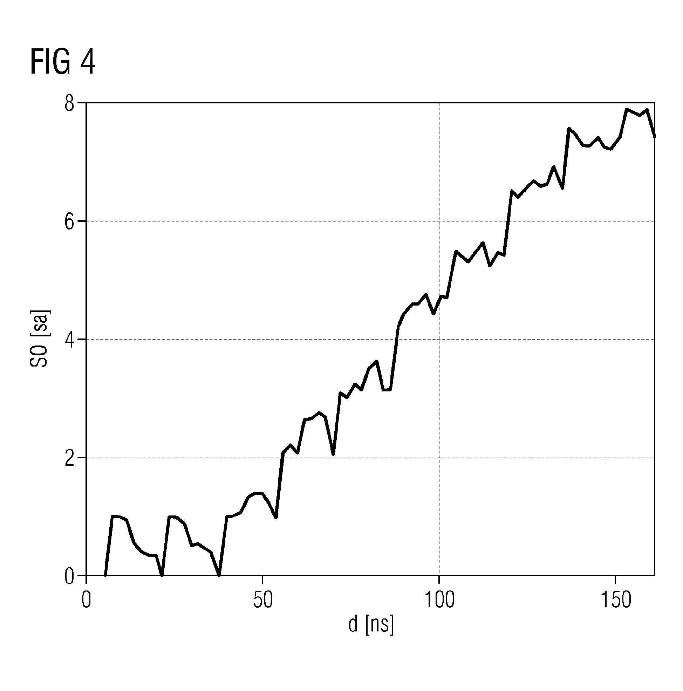

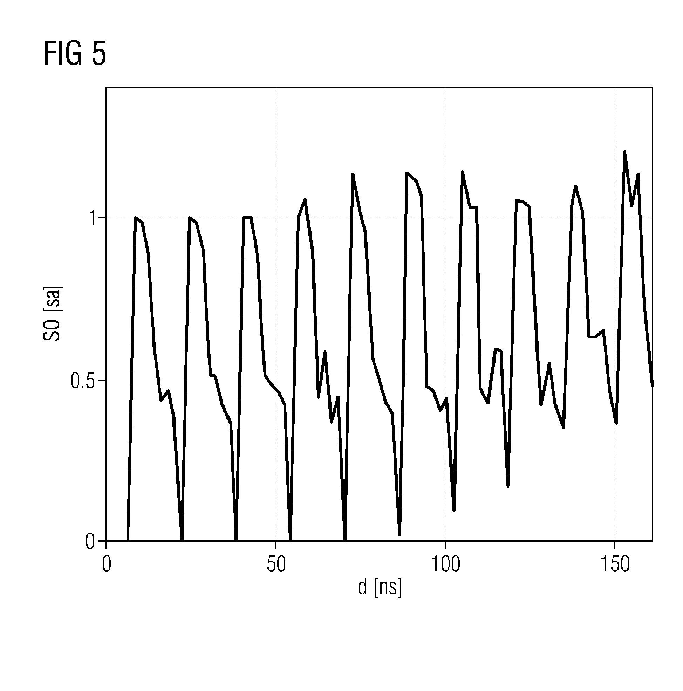

Zum Nachweis der Auswirkungen des Schwellwerts h auf die Detektion von Präambeln und damit auf die Synchronisation wurden von den Erfindern Simulationen durchgeführt, welche in den Diagrammen der Fig. 4 und Fig. 5 gezeigt sind. Dabei wurde ein empfangender Netzknoten simuliert, wobei für die Synchronisation basierend auf dem Frame F1 ein Offset auftritt. Demzufolge wurden nachfolgende Frames F2 mit einem Offset angehängt. In dem Diagramm der Fig. 4 ist dieser Offset als Drift d in ns entlang der Abszisse wiedergegeben. Entlang der Ordinate ist der sich hieraus ergebende Synchronisations-Offset SO für den Empfang der kurzen Präambel SP in Samples sa von 32 ns dargestellt. In dem Diagramm der Fig. 4 wurde dabei kein Schwellwert zur Detektion der Präambeln verwendet. Man erkennt, dass der Synchronisations-Offset mit steigendem Drift deutlich zunimmt. Fig. 5 zeigt ein Diagramm analog zu Fig. 4, wobei die gleiche Simulation durchgeführt wurde, nunmehr jedoch bei der Detektion der kurzen Präambeln ein Schwellwert verwendet wurde. Man erkennt, dass die Offsets im Unterschied zur Fig. 4 wesentlich kleiner sind und auch bei größeren Drifts immer im Bereich von einem Sample liegen.

Die im Vorangegangenen beschriebenen Ausführungsformen der Erfindung weisen eine Reihe von Vorteilen auf. Insbesondere wurde von den Erfindern erkannt, dass es ausreichend ist, innerhalb eines Zyklus der Datenübertragung im Standard IEEE 802.15.4 nur zu Beginn die Standardpräambel zu verwenden, mit der ein Beacon übertragen wird. Die zu späteren Zeitpunkten übermittelten Präambeln können demgegenüber eine wesentlich kürzere Länge aufweisen, wobei immer noch eine ausreichende Synchronisation zwischen Sender und Empfänger gewährleistet ist. Auf diese Weise kann die Zykluszeit deutlich verkürzt werden. Zur Umsetzung der Erfindung muss die entsprechende Information, ob in der MAC-Schicht ein Beacon-Frame oder ein Daten-Frame übertragen wird, an die physikalische Schicht weitergegeben werden, so dass die Präambeln in Abhängigkeit von ihrer Position innerhalb eines Zyklus richtig detektiert werden.

**Patentansprüche**

1. Verfahren zur drahtlosen Datenübertragung in einem Datennetz (DN), wobei in aufeinander folgenden Zyklen (SF) jeweils Daten zwischen einem ersten Netzknoten (G) und einer Mehrzahl von zweiten Netzknoten (A, S) übertragen werden, wobei innerhalb eines Zyklus:

    - der erste Netzknoten (G) zu Beginn des Zyklus (SF) einen ersten Frame (F1) der physikalischen Schicht aussendet, der eine Präambel (LP) und einen Initialisierungs-Frame der MAC-Schicht beinhaltet, wobei die Präambel (LP) durch die zweiten Netzknoten (A, S) bei Empfang detektiert wird und der Initialisierungs-Frame (BE) die Datenübertragung für den Zyklus (SF) auf der MAC-Schicht initialisiert;

    - nach Aussenden des ersten Frames (F1) Daten in einem oder mehreren Zeitschlitzen aus einer Mehrzahl von Zeitschlitzen übertragen werden, wobei einem jeweiligen Zeitschlitz der Mehrzahl von Zeitschlitzen ein zweiter Netzknoten (A, S) zugeordnet ist und bei einer Datenübertragung in dem jeweiligen Zeitschlitz ein zweiter Frame (F2) der physikalischen Schicht zwischen dem ersten Netzknoten (G) und dem zugeordneten zweiten Netzknoten (A, S) übermittelt wird, wobei der zweite Frame (F2) eine Präambel (SP) und einen Frame der MAC-Schicht mit den zu übertragenden Daten beinhaltet, wobei die Präambel von dem empfangenden ersten oder zweiten Netzknoten (G; A, S) detektiert wird;

**dadurch gekennzeichnet, dass**

die Präambeln (LP, SP) in Abhängigkeit davon festgelegt sind, ob die Präambel (LP, SP) innerhalb eines ersten Frames (F1) oder zu einem späteren Zeitpunkt im Zyklus (SF) innerhalb eines zweiten Frames (F2) ausgesendet wird, wobei eine Präambel (LP) im ersten Frame (F1) als erste Präambel und die Präambeln in den zweiten Frames (F2) als zweite Präambeln (SP) derart spezifiziert sind, dass die jeweiligen Längen zumindest eines Teils der zweiten Präambeln (SP) unterschiedlich zu der Länge der ersten Präambel (LP) sind.

2. Verfahren nach Anspruch 1, **dadurch gekennzeichnet, dass** die jeweiligen Längen aller zweiter Präambeln (SP) unterschiedlich zu der Länge der ersten Präambel (LP) sind.

3. Verfahren nach Anspruch 1 oder 2, **dadurch gekennzeichnet, dass** zumindest ein Teil der zweiten Präambeln (SP) und insbesondere alle zweiten Präambeln kürzere Längen als die erste Präambel (LP) aufweisen.

4. Verfahren nach einem der vorhergehenden Ansprüche, **dadurch gekennzeichnet, dass** alle zweiten Präambeln (SP) die gleiche Länge aufweisen und insbesondere einander entsprechen.

5. Verfahren nach einem der vorhergehenden Ansprüche, **dadurch gekennzeichnet, dass** die Längen der zweiten Präambeln (SP) zumindest teilweise voneinander verschieden sind.

6. Verfahren nach einem der vorhergehenden Ansprüche, **dadurch gekennzeichnet, dass** die drahtlose Datenübertragung auf dem Standard IEEE 802.15.4 basiert, wobei als MAC-Schicht vorzugsweise die Schicht gemäß dem Standard IEEE 802.15.4e verwendet wird und der Initialisierungs-Frame besonders bevorzugt ein LL-Beacon ist.

7. Verfahren nach einem der vorhergehenden Ansprüche, **dadurch gekennzeichnet, dass** die erste Präambel (LP) einen Synchronisationsteil aus einer Mehrzahl von gleichen Präambelsymbolen (S1, S2) und eine daran anschließende Codesequenz (SFD) umfasst, welche das Ende der Präambel (LP) anzeigt und vorzugsweise unter Verwendung von einem oder mehreren der Präambelsymbole (S1, S2) festgelegt ist.

8. Verfahren nach Anspruch 7, **dadurch gekennzeichnet, dass** eine jeweilige zweite Präambel (SP) ein einzelnes Präambelsymbol (S1, S2) ohne daran anschließende Codesequenz (SFD) darstellt.

9. Verfahren nach einem der vorhergehenden Ansprüche, **dadurch gekennzeichnet, dass** ein zweiter Netzknoten (A, S) eine erste Präambel (LP) basierend auf einem ersten Kreuzkorrelations-Filter detektiert, mit dem Kreuzkorrelationswerte zwischen dem Code der ersten Präambel (LP) und einem empfangenen Signal oder einem aus dem empfangenen Signal abgeleiteten Signal zu verschiedenen Zeitpunkten ermittelt werden, wobei über den maximalen Kreuzkorrelationswert, der durch den ersten Kreuzkorrelations-Filter ausgegeben wird, die erste Präambel (LP) detektiert wird, wobei vorzugsweise zur Bestimmung des maximalen Kreuzkorrelationswerts ein Schwellwert festgelegt ist, den der maximale Kreuzkorrelationswert überschreiten muss.

10. Verfahren nach Anspruch 9, **dadurch gekennzeichnet, dass** der Code zumindest einer zweiten Präambel (SP) als Teilmenge im Code der ersten Präambel (LP)enthalten ist, wobei ein zweiter Netzknoten (A, S) bei der Detektion der ersten Präambel (LP) einen zweiten Kreuz-Korrelationsfilter verwendet, mit dem Kreuzkorrelationswerte zwischen dem Code der zumindest einen zweiten Präambel (SP) innerhalb der ersten Präambel (LP) und einem empfangenen Signal zu verschiedenen Zeitpunkten ermittelt werden, wobei die Kreuzkorrelationswerte, welche durch den zweiten Kreuzkorrelations-Filter ausgegeben werden, aus dem empfangenen Signal abgeleitete Signale darstellen, basierend auf denen der erste Kreuzkorrelations-Filter die erste Präambel (LP) detektiert.

11. Verfahren nach Anspruch 9 oder 10, **dadurch gekennzeichnet, dass** der erste Netzknoten (G) oder ein zweiter Netzknoten (A, S) die zweite Präambel (SP) basierend auf einem oder dem zweiten Kreuzkorrelations-Filter detektiert, mit dem Kreuzkorrelationswerte zwischen dem Code der zweiten Präambel (SP) und einem empfangenen Signal oder einem aus dem empfangenen Signal abgeleiteten Signal zu verschiedenen Zeitpunkten ermittelt werden, wobei über den maximalen Kreuzkorrelationswert, der durch den zweiten Kreuzkorrelations-Filter ausgegeben wird, die zweite Präambel (SP) detektiert wird.

12. Verfahren nach Anspruch 11, **dadurch gekennzeichnet, dass** zur Bestimmung des maximalen Kreuzkorrelationswerts, der durch den zweiten Kreuzkorrelations-Filter im Rahmen der Detektion der zweiten Präambel (SP) ausgegeben wird, ein Schwellwert festgelegt ist, den der maximale Kreuzkorrelationswert überschreiten muss.

**13.** Verfahren nach Anspruch 12 in Kombination mit Anspruch 10, **dadurch gekennzeichnet, dass** der Schwellwert basierend auf dem maximalen Kreuzkorrelationswert festgelegt wird, der im Rahmen der Detektion der ersten Präambel (LP) in einem zweiten Netzknoten (A, S) durch den ersten oder zweiten Kreuzkorrelations-Filter ausgegeben wird, wobei der Schwellwert vorzugsweise ein vorbestimmter prozentualer Anteil des maximalen Kreuzkorrelationswerts ist, der im Rahmen der Detektion der ersten Präambel (LP) durch den ersten oder zweiten Kreuzkorrelations-Filter ausgegeben wird.

**14.** Verfahren nach einem der vorhergehenden Ansprüche, **dadurch gekennzeichnet, dass** das Verfahren in einem Datennetz (DN) einer industriellen Automatisierungsanlage durchgeführt wird.

**15.** Verfahren nach einem der vorhergehenden Ansprüche, **dadurch gekennzeichnet, dass** das Verfahren auf der physikalischen Schicht gemäß dem Standard IEEE 802.15.4 UWB PHY basiert und als MAC-Schicht die LLDN-MAC-Schicht aus dem Entwurf des Standards IEEE 802.15.4e verwendet wird.

**16.** Verfahren nach Anspruch 15, bei dem die erste Präambel (LP) aus der Präambel gemäß dem Standard IEEE 802.15.4 UWB PHY besteht und die zweite Präambel (SP) aus einem einzelnen Präambelsymbol dieser Präambel.

**17.** Datennetz zur drahtlosen Datenübertragung, umfassend einen ersten Netzknoten (G) und eine Mehrzahl von zweiten Netzknoten (A, S), wobei der erste Netzknoten (G) und die Mehrzahl von zweiten Netzknoten (A, S) derart ausgestaltet sind, dass im Betrieb des Datennetzes (DN) in aufeinander folgenden Zyklen (SF) jeweils Daten zwischen dem ersten Netzknoten (G) und der Mehrzahl von zweiten Netzknoten (A, S) mit einem Verfahren nach einem der vorhergehenden Ansprüche übertragen werden.

**18.** Netzknoten zur Verwendung in einem Verfahren nach einem der Ansprüche 1 bis 16, **dadurch gekennzeichnet, dass** der Netzknoten ein erster Netzknoten (G) ist, der erste Präambeln (LP, SP) aussenden kann und zweite Präambeln (SP) aussenden und/oder detektieren kann.

**19.** Netzknoten zur Verwendung in einem Verfahren nach einem der Ansprüche 1 bis 16, **dadurch gekennzeichnet, dass** der Netzknoten ein zweiter Netzknoten (A, S) ist, der erste Präambeln detektieren kann und zweite Präambeln aussenden und/oder detektieren kann.

FIG 1

# FIG 2

# FIG 3

FIG 4

FIG 5